# EUROPÄISCHE PATENTANMELDUNG

(11) **EP 2 233 706 A1**
(43) Veröffentlichungstag der Anmeldung: **29.09.2010**
(21) Anmeldenummer: 09004331.6
(22) Anmeldetag: 26.03.2009
(51) Int. Cl.: F01L 1/46

(54) **Kolbenbrennkraftmaschine**

(71) Anmelder: Weispfenning, Helmut, 72654 Neckartenzlingen (DE)
(72) Erfinder: Weispfenning, Helmut, 72654 Neckartenzlingen (DE)

(57) **Zusammenfassung**

Um zu vermeiden dass zuviel ungenützte Energie am Ende des Expansionstakts verloren geht, sieht die Erfindung vor, dass das Ansaugventil (3) früher geschlossen wird. Um Schaden zu vermeiden, ist ein Sicherheitsventil (4) in den Zylinderdeckel (13) angebracht worden. Probleme, verursacht vom Vakuum im Zylinder, werden vermieden, indem ein Rückschlagventil (2) im Zylinderdeckel (13) angebracht wird. Der Verbrauch wird gesenkt mittels eines kühlwasserlosen Keramikmotors; eine optimierte Auspuffanlage reduziert den Schall.

## Beschreibung

Die Erfindung betrifft ein beim Betrieb während eines Zyklus einen Arbeitstakt und einen Ausstoßtakt ausführendes Kolbenbrennkraftaggregat mit mindestens einem Zylinder, einem darin geführten Kolben und einem im Zylinder befindlichen und vom Kolben begrenzten Verbrennungsraum sowie mindestens je einem in den Verbrennungsraum mündenden Einlasskanal und Auslasskanal für das zu verbrennende bzw. das verbrannte Gas oder Gasgemisch.

Derartige Kolbenbrennkraftaggregate finden insbesondere in der Fahrzeugtechnik ihre Anwendung, wo sie als Antriebsmotoren eingesetzt werden. In Bezug auf den Bewegungsablauf des oder der Kolben sind die Aggregate im Wesentlichen in zwei Gattungen unterteilt, wovon die eine als Hubkolbenaggregat und die andere als Drehkolbenaggregat bezeichnet wird. Beide Gattungen haben gemeinsam, dass in einem Verbrennungsraum ein Gas, in der Regel Luft und ein Kraftstoff eingeleitet werden, wobei die beiden Medien entweder getrennt oder als Gas-Kraftstoffgemisch zugeführt werden. Nach einer Verdichtung mittels eines sich bewegenden Kolbens wird das Gas-Kraftstoffgemisch entzündet, es expandiert und es ergibt sich daraus eine weiterführende Bewegung des Kolbens. In einem weiteren Arbeitsgang wird das verbrannte Gas-Kraftstoffgemisch an die Umgebung ausgestoßen.

Derartige Aggregate haben den Nachteil eines relativ niedrigen Wirkungsgrades, da ein Großteil der in Form des Kraftstoffes zugeführten Energie in Wärme umgewandelt und insbesondere über die Abgase ungenutzt an die Umgebung abgegeben wird. Des Weiteren erfolgt die Verbrennung des Gemisches im Verbrennungsraum in der Regel nicht vollständig, so dass ein gewisser Rest an unverbranntem Kraftstoff erhalten bleibt, der ebenfalls über die Abgase ungenutzt freigesetzt wird. Ein weiterer Nachteil der genannten Aggregate entsteht aus der Tatsache, dass das bei der Expansion nach der Verbrennung des Gas-Kraftstoffgemisches entstehende große Volumen nicht vollständig in Bewegungsenergie umgesetzt wird und somit ein ungenutzter Restdruck im Verbrennungsraum verbleibt, der durch Öffnung eines Auslassventils oder Auslassschlitzes an die Umgebung entweicht.

Die Aufgabe der Erfindung ist es, diesen Nachteilen abzuhelfen und ein Kolbenbrennkraftaggregat zu schaffen, dessen Wirkungsgrad gegenüber bekannten Aggregaten höher liegt.

Diese Aufgabe wird wie folgt gelöst:

### Lösungsweg für Treibstoffeinsparung und höheren Wirkungsgrad:

Bei derzeitiger Motorhubraumgröße, angenommen 1 m³ (zum besseren Verständnis m³ d.h. maximiert gewählt), wird natürlich auch 1 m³ Luft angesaugt. Der Druck ganz am Ende des Expansionstrakts ist aber derzeit noch viel zu hoch.

Dieser hohe Enddruck wird entschieden kleiner, wenn z. B. 1 m³ Luft auf 2 m³ Hubraumgröße angesaugt wird.

### Ansaugen:

1. Derzeit ungenützte Druck- und Wärmeenergie am Ende des Expansionstakts eines Motors ist viel zu hoch. Also werden die beiden Energiearten verringert, um den Benzinverbrauch zu senken.
   a) Das ist **dadurch gekennzeichnet, dass** das Ansaugventil schon früher schließt. Es schließt z. B. schon dann, wenn der Hubraum erst halb mit Luft gefüllt ist. Bei 2 m³ Hubraum heißt das 1 m³ Luft.
      Ab dem Ansaugweg entsteht daher ein Unterdruck im Hubraum. Dieser (im Maximalfall 0,18 kp/cm²) entsprechende Öffnungskraft jedoch muss das Ansaugventil standhalten, ohne sich von selbst zu öffnen.
   b) Dieses wird bewerkstelligt durch Verstärkung der Ansaugventilfeder sowie durch Änderung an der Nockenwelle.
2. Die gefasste angesaugte Luft (1 m³) wird nun also bei weiterer Vergrößerung des Hubraumes (2 m³) ins Vakuum entspannt.
   a) Das ist **dadurch gekennzeichnet, dass** die dazu nötige mechanische Energie zunächst für das Entspannen aufgebracht wird. Diese Vakuumenergie wird aber beim anschließenden Verdichtungstakt wieder zurück gewonnen.
   b) Dieses ist ein physikalisches Prinzip und es ist daher keinerlei weitere Maßnahme dafür erforderlich.

### Verdichten:

3. Das Verdichtungsverhältnis (derzeit z. B. 10 : 1) muss nach wie vor gleich bleiben, bezogen auf das angesaugte Luftvolumen (1 m³).
   a) Das ist **dadurch gekennzeichnet, dass** der Brennraum zum Hubraum entsprechend stimmt. Im Vergleich zum Hubraum 2 m² heißt das 1 m³ Luft und somit 0,1 m³ Brennraum.
   b) Dieses wird bewerkstelligt durch Einhaltung vorgehender Vorgaben.
4. Überwachungseinrichtung:
   Das Ansaugventil kann eventuell von selbst zu Schaden kommen durch altern oder sonstiges, wie es derzeit ja auch passieren kann.
   a) Das ist **dadurch gekennzeichnet, dass** anstatt 1 m Luft etwas mehr angesaugt wird und somit das Verdichtungsverhältnis unangebracht hochgetrieben wird.
   b) Das wird bewerkstelligt durch Einsetzen eines kleinen Sicherheitsventils in den Zylinderdeckel.

Das Sicherheitsventil wird z. B. 10 % höher eingestellt als maximaler Betriebsdruck des Motors. Am besten sollte dieser beim Motortest ermittelt werden. Die bei Überdruck entweichende Luft über das Sicherheitsventil wird in den Auspuff geführt. Trifft das ein, welches durch ein Alarm-Monometer festgestellt wird, ist eine Reparatur fällig, welches bald geschehen muss.
5. Das Verbrennungs-Mischungsverhältnis muss gleich bleiben. Grundlage ist nach wie vor das angesaugte Luftvolumen (1 m³).
   a) Das ist dadurch gekennzeichnet dass die Kraftstoffzufuhrmenge beibehalten wird.
   b) Dieses wird bewerkstelligt durch gleiche Einstellung nach wie vor des Einspritz bzw. des Vergasersystems.

### Expansion:

6. Das Durchdrehen des Motors z. B. im kalten Zustand (Anlasserbetrieb) oder drehen vor allem im Motorteillastbetrieb zehren unsinnigerweise mechanische Energie auf. Das bedeutet Wirkungsgradverlust im Expansionstakt.
   a) Das ist **dadurch gekennzeichnet, dass** die Luft im Expansionstakt nicht in der Lage ist, den gesamten Hubraum auszufüllen. Es stellt sich daher zwangsläufig sogar ein Vakuum ein.
   b) Abhilfe wird bewerkstelligt durch Einbau eines Rückschlagventils in den Zylinderkopfdeckel. Das Rückschlagventil wird im Folgenden anhand beiliegender Zeichnung erläutert. Es zeigt:
      Figur A: einen Schnitt durch das erfindungsgemäße Rückschlagventil - siehe Anhang.
         Gemäß Figur A besteht das Rückschlagventil aus dem Gehäuse (1), welches Ventilschaft mit Ventilteller (2) beinhaltet, Druckfeder (3), lose Duckplatte (4), feste Druckhülse (5) sowie Befestigung (6). Druckglocke (7) bildet mit Befestigung (8) und Stößelstange (9) den Stößel komplett.

### Funktion während des Expansionstakts:

Druckglocke (7) an Stößelstange (9) drückt auf lose Druckplatte (4) und somit auf die gegen Vakuum verstärkte Druckfeder (3). Druckfeder (3) wird dabei etwas zusammengedrückt. Das gilt im Expansionstakt von 1/4 bis zum Ende dessen. Hierbei bleibt Ventil (2) immer noch geschlossen und öffnet erst im Vakuumfall selbsttätig, weil Druckfeder (3) dieses ja jetzt zulässt. Schließen erfolgt sofort, wenn Glocke (7) nach oben geht und Druckfeder (3) wieder aktiv dadurch wird.

### Ausstoßen:

7. Die Auspuff-Schallstärke verringert sich infolge des erreichten kleineren Expansions-Enddrucks erheblich.
   a) Das ist **dadurch gekennzeichnet, dass** die Schallstärke entsprechend der Druckstärke 0,0 BAR Überdruck im besten Ausführungsfall sogar unhörbar ist.
   b) Dieses wird bewerkstelligt durch Änderung des Schalldämpfers in eine wesentlich einfachere Bauweise in eine vorteilhafte Auspuffanlage.

### Vorteilhafte Weiterbildung der Erfindung:

8. Bis hierher galt der heutige Motor als Basis, weshalb in diesen Beispielen 20 % des Treibstoffgehalts durch Wasserkühlung vernichtet wird.
   a) Das ist **dadurch gekennzeichnet, dass** die Wasserkühlung hier entfällt, welches weitere Einsparung von Kraftstoff bedeutet.
   b) Dieses wird bewerkstelligt durch Wegfall der Wasserkühlung. In diesem Fall kommen daher eventuell feuerfeste Keramikmotoren zum Einsatz, welches bei Versuchen ermittelt werden muss. Die Motortemperatur steigt nicht ins Unendliche, sondern hält sich mit der Verbrennungstemperatur die Waage.

### Kolbenbrennkraft-Maschine mit interner Luftkühlung:

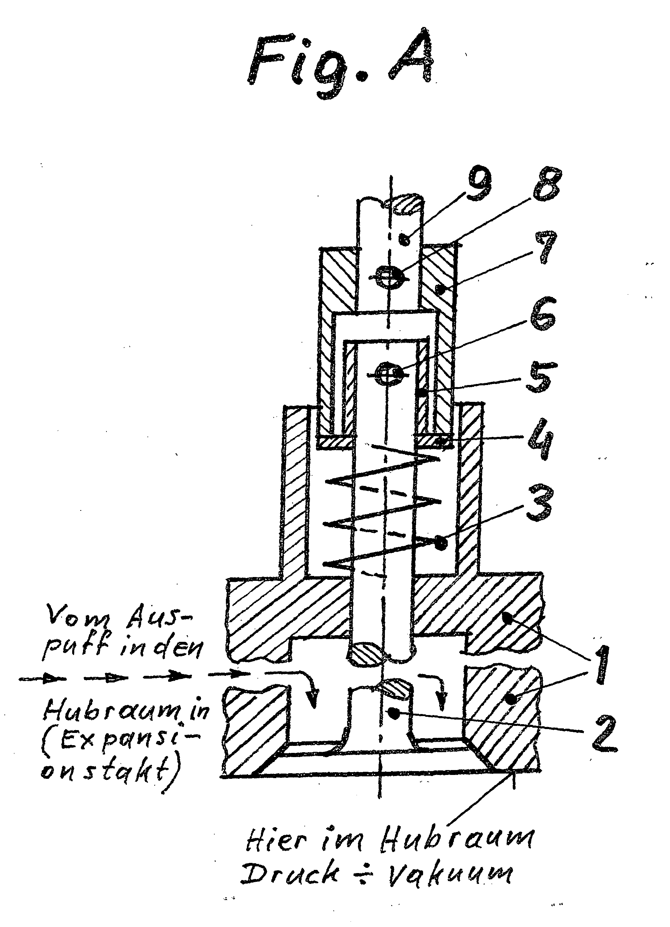

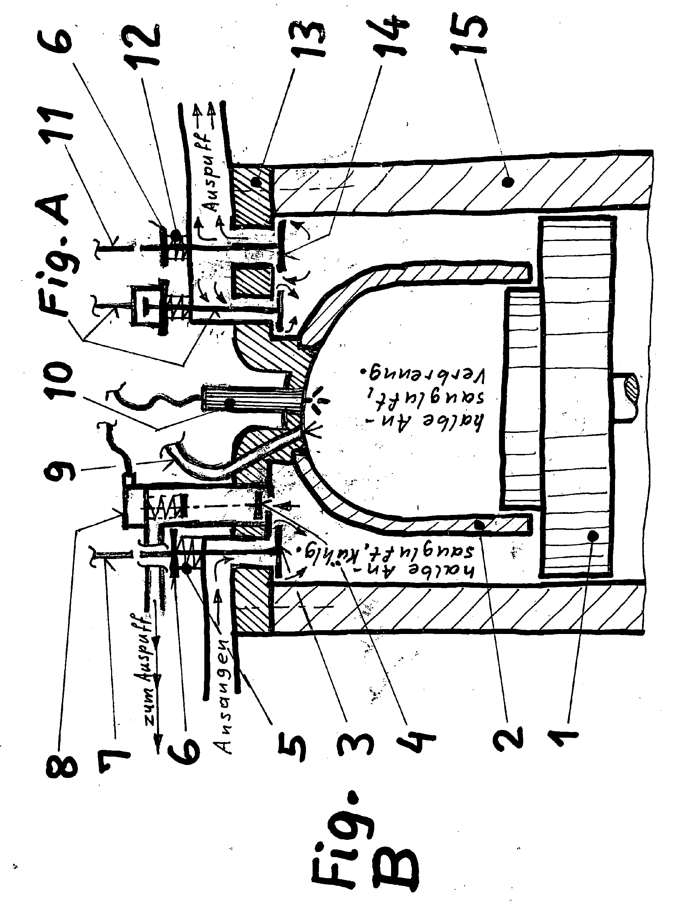

Dies ist eine weitere Ausführung der Erfindung, welche im Folgenden anhand der beiliegenden Zeichnung näher erläutert wird. Es zeigt:
Figur B: einen Schnitt durch den erfindungsgemäßen Kolbenmotor als Beispiel - siehe Anhang.

Kolben (1) ragt in die Lufttrennglocke (2) hinein, um dadurch Explosion - bei richtigem Treibstoff-Luftgemisch - zu gewähren (Verdichtungstakt).

Ansaugventil (3), lose verstärkte Druckfeder (5) und feste Druckplatte (6) werden betätigt über Ventilstößel (7) (Ansaugtakt).

Sicherheitsventil (4) zusammen mit Alarmgeber (8) werden vom Motorhersteller konzipiert als Überwachung der Dichtheit Ansaugventil (3) und somit des angesaugten Luftvolumens (Verdichtungstakt).

Treibstoff-Einspritzung (9) und Zündkerze (10) münden, wie üblich, in den Explosionsraum, d. h. in die Lufttrennglocke (2) (Explosion findet jetzt statt bei dieser Kolbenstellung).

Rückschlagventil Figur A - siehe eigene Beschreibung S. 5 - kommt hier ebenfalls zum Einsatz. (Zeichnung Figur A im Anhang).

Ausstoßventil (14), lose verstärkte Druckfeder (12) und feste Druckplatte (6) werden betätigt über Ventilstößel (11) (Expansionstakt).

Zylinderkopf-Deckel (13) zusammen mit Zylinder (15) bilden den Hubraum vom Koben (1) begrenzt.

### Fazit zu obigem Motorbeispiel:

Dieser Motortyp hat im Vergleich zum derzeitigen größere Zylinder-Volumen und zwar 2 m³ anstatt 1 m³. Ein weiteres Merkmal ist die innere Luftkühlung und die Neukonzeption des Verbrennungsraums:

**Einbauen Fig. B, Pos. 4 und Fig. A = Sicherheits- und Rückschlagventil**

| Mot. | Ansaugluft | Hubraum | Nach Expansion | Einbauen | |
|---|---|---|---|---|---|
| | m³ | m³ | kp/m² | Sicherheitsventil | Rückschlagventil |
| 1 | 1,0 | 1,0 | 38099 | | |
| 2 | 1,0 | 2,0 | 14437 | X | |
| 3 | 0,89 | 1,78 | 14437 | X | |
| 4 | 1,0 | 2,6 | 10000 | X | X |
| 5 | 0,88 | 2,28 | 10000 | X | X |
| 6 | 1,0 | 1,0 | 45124 | | |
| 7 | 0,80 | 0,80 | 45124 | | |
| 8 | 1,0 | 2,0 | 17098 | X | |
| 9 | 0,71 | 1,41 | 17098 | X | |
| 10 | 1,0 und 1,0 f. Kühlung | 2,0 | 26063 | | |
| 11 | 0,76 und 0,76 f. Kühlung | 1,51 | 26063 | | |
| 12 | 1,0 und 1,0 f. Kühlung | 4,0 | 9876 Druck vergrößern siehe Fig. A | X | Hubraum ver-kleinern |
| 13 | 0,70 und 0,70 f. Kühlung | 2,8 | 9876 Druck vergrößern siehe Fig. A | X | Hubraum ver-kleinern |
| zu 10 | 1,0 und 1,0 f. Kühlung | 2,0 | 27562 | | |
| zu 11 | 0,80 und 0,80 f. Kühlung | 1,6 | 27562 | | |
| zu 12 | 1,0 und 1,0 f. Kühlung | 4,0 | 10444 | X | evtl. |
| zu 13 | 0,72 und 0,72 f. Kühlung | 2,9 | 10444 | X | evtl. |

**Technische Daten und Empfehlungen**

| Mot. | Diverse Motoren-Werdegangsstufen zum Vergleichen und Beurteilen: | Ansaugluft m³ | Hubraum m³ | Temperatur max. °C | Wirkungsgrad an | | Treibstoff-verbrauch % | Leistung kcal |
|---|---|---|---|---|---|---|---|---|
| | | | | | Kurbelwelle % | Räder % | | |
| 1 | Derzeitiger Motor, Luftmenge und Hubraumgröße in m³ gewählt, da somit leichtverständlich. Wasser oder luftgekühlt. Verdichtung: 10 : 1 | 1,0 | 1,0 | 2341 | 48,0 | 30,0 | 100,0 | 256,5 |
| | | | | | | | | |
| 2. | Motor 1 jedoch mit zweifacher Hubraumgröße bedeutet halbe Ansaugluftmenge | 1,0 | 2,0 | 2341 | 54,0 | 36,0 | 100,0 | 288,8 |
| | | | | | | | | |
| 3 | Erfingungsgemäß Motor 2; 78 % größerer Motorhubraum bei gleich großer Leistung wie Motor 1 | 0,89 | 1,78 | 2341 | 54,0 | 36,0 | 89,0 | 256,5 |
| | | | | | | | | |
| 4 | Motor 2 jedoch mit totaler Ausbeute von mechanischer Energie durch größeren Hubraum. Drucklose Ausstoßluft "Informationsvariante" | 1,0 | 2,6 | 2341 | 54,7 | 36,7 | 100,0 | 292,1 |
| | | | | | | | | |
| 5 | Motor 4, Leistung wie Motor 1 | 0,88 | 2,29 | 2341 | 54,7 | 36,7 | 88,0 | 256,5 |
| | | | | | | | | |
| 6 | Derzeitiger Motor 1 jedoch keine Wasser-oder Luftkühlung. Temperatur max. 480° C höher, deshalb evtl. Keramikmotor. Verdichtung 10 : 1 | 1,0 | 1,0 | 2823 | 60,0 | 42,0 | 100,0 | 320,7 |
| | | | | | | | | |
| 7 | Motor 6, Leistung wie Motor 1 | 0,80 | 0,80 | 2823 | 60,0 | 42,0 | 80,0 | 256,5 |
| | | | | | | | | |
| 8 | Motor 6 jedoch mit zweifacher Hubraumgröße bedeutet halbe Ansaugluftmenge | 1,0 | 2,0 | 2823 | 67,9 | 49,9 | 100,0 | 363,2 |
| | | | | | | | | |
| 9 | Erfindungsgemäß Motor 8, bei gleichgroßer Leistung wie Motor. 1 | 0,71 | 1,41 | 2823 | 67,9 | 49,9 | 70,6 | 256,5 |

| | **Höhere Verdichtung, nämlich 12,5 : 1 anstatt 10 : 1 für weitere Leistungserhöhung** | | | | | | | |
|---|---|---|---|---|---|---|---|---|
| 10 | Motor mit innerer Kühlung, indem einfach mehr Luft angesaugt wird. Diese Mehrluftmenge bestimmt die niedrigere Temperatur und trägt ihrerseits zur Leitstungssteigerung bei. Verdichtung 12,5 : 1 | 1,0 und 1,0 f. Kühlung | 2,0 | 1682 | 63,4 | 45,4 | 100,0 | 338,8 |
| | | | | | | | | |
| 11 | Motor 10, Leistung wie Motor 1 | 0,76 und 0,76 f. Kühlung | 1,51 | 1682 | 63,4 | 45,4 | 75,7 | 256,5 |
| | | | | | | | | |
| 12 | Motor 10 mit zweifacher Hubraumgröße bedeutet halbe Ansaugluftmenge Verdichtung 12,5 : 1 | 1,0 und 1,0 f. Kühlung | 4,0 | 1682 | 68,9 | 50,9 | 100,0 | 368,4 |
| | | | | | | | | |
| 13 | Erfindungsgemäß Motor 12 jedoch bei gleichgroßer Leisetung wie Motor 1 Verdichtung 12,5 anstatt 10 : 1, um weitere Leistungserhöhung zu erreichen. | 0,70 und 0,70 f. Kühlung | 2,8 | 1682 | 68,9 | 50,9 | 69,6 | 256,5 |

| | **Verdichtung 10 : 1 anstatt 12,5 : 1 sonst wie Motor 10; 11; 12; 13 Diese 4 Motoren dienen nur zur Information** | | | | | | | |
|---|---|---|---|---|---|---|---|---|
| zu 10 | Motor mit innerer Kühlung, indem einfach mehr Luft angesaugt wird. Diese Mehrluftmenge bestimmt die niedrigere Temperatur und trägt ihrerseits zur Leitstungssteigerung bei. Verdichtung 10 : 1 | 1,0 und 1,0 f. Kühlung | 2,0 | 1618 | 60,0 | 42,0 | 100,0 | 320,7 |
| | | | | | | | | |
| zu 11 | Motor zu 10, Leistung wie Motor 1 | 0,8 und 0,8 f. Kühlung | 1,6 | 1618 | 60 | 42 | 80 | 256,5 |
| | | | | | | | | |
| zu 12 | Motor zu 10 mit zweifacher Hubraumgröße bedeutet halbe Ansaugluftmenge Verdichtung 10 : 1 | 1,0 und 1,0 f. Kühlung | 4,0 | 1618 | 66,3 | 48,3 | 100 | 354,4 |
| | | | | | | | | |
| zu 13 | Erfindungsgemäß Motor zu 12 jedoch bei gleichgroßer Leistung wie Motor 1 Verdichtung 10 : 1 anstatt 12,5 : 1 | 0,72 und 0,72 f. Kühlung | 2,9 | 1618 | 66,3 | 48,3 | 72,4 | 256,5 |

| | Energiearten | Schädliche Erzeugung von Co2 | Schädlicher Erschöpfungs-vorgang der Rohstoffe innerhalb Jahrzehnten | Schädlich wegen eintreten-der Lebensmittelknappheit | Tanken an Tankstellen | Tanken duch Austauschen Autobatterie Druckgasflasche | | |
|---|---|---|---|---|---|---|---|---|
| 14 | Fossilientreibstoff | | | | | | | |
| | • flüssig | X | X | | X | X | | |
| | • gasförmig | X | X | | | | | |
| | | | | | | | | |
| 15 | Regenerativ Treibstoff | | | | | | | |
| | • flüssig | X Bilanz | | X | X | | | |
| | • gasform | X neutral | | X | | X | | |
| | • Elektr. Strom für Autobatterie | | X Batteriebaustoffe wegen großer Stückzahl. Global | | | X | | |
| | • Wasserstoff | | | | | X | | |

16. Flüssiger Wasserstoff wird für die Zukunft wohl die beste Lösung sein, insbesondere in Zusammenhang mit diesem erfindungsgemäßen Kolbenmotor mit hervorragendem Wirkungsgrad (bis zu 50,9 % anstatt 30 % wie bisher), d. h. höchstmögliche Effizienz aus dem Wärmeinhalt des Treibstoffs. Motortyp Nr. 4 zeigt z. B. Totaleffizienz.
17. Sicherheit im Brandfall erfordert ein Steuersystem wie im Airbag und ein Thermoelement. Bei Aufprall des Fahrzeuges oder Hitzeentwicklung über ca. 70° C erfolgt sofort das automatische Schließen des Wasserstofftankaustritts. usw.
18. Rückblickend ist nun erkennbar, dass die aufgeführten Vorteile unser aller segensreicher Nutzen sein könnte. Insbesondere müssen die Lizenzgebühren pro Motor mit einer einzigen Münze beglichen werden können.

Die Erkenntnis, die dieser Erfindung zugrunde liegen, sind in sich selbst schlüssig und beweisbar.

Irgendein Motor-Bauingenieur müsste dies alles erkennen, prüfen und in die Wirklichkeit verwandeln.

Höchste Dringlichkeit ist geboten und der Begriff "man sollte" ist ab jetzt überholt; ganz einfach, "es zählen nur noch Taten", um dann das neue Produkt ins Rollen zu bringen

Bei derzeitiger Motorhubraumgröße, angenommen 1 m³ (zum besseren Verständnis m³ d.h. maximiert gewählt), wird natürlich auch 1 m³ Luft angesaugt. Der Druck ganz am Ende des Expansionstrakts ist aber derzeit noch viel zu hoch
Dieser hohe Enddruck wird entschieden kleiner, wenn z. B. 1 m³ Luft auf 2 m³ Hubraumgröße angesaugt wird.

## Patentansprüche

**1.**
Derzeit ungenützte Druck- und Wärmeenergie am Ende des Expansionstakts eines Motors ist viel zu hoch. Also werden die beiden Energiearten verringert, um den Benzinverbrauch zu senken.
a Das ist **dadurch gekennzeichnet, dass** das Ansaugventil schon früher schließt. Es schließt z. B. schon dann, wenn der Hubraum erst halb mit Luft gefüllt ist. Bei 2 m³ Hubraum heißt das 1 m³ Luft.
Ab dem Ansaugweg entsteht daher ein Unterdruck im Hubraum. Dieser (im Maximalfall 0,18 kp/cm²) entsprechende Öffnungskraft jedoch muss das Ansaugventil standhalten, ohne sich von selbst zu öffnen.
b Dieses wird bewerkstelligt durch Verstärkung der Ansaugventilfeder sowie durch Änderung an der Nockenwelle.

**2.** Die gefasste angesaugte Luft (1 m³) wird nun also bei weiterer Vergrößerung des Hubraumes (2 m³) ins Vakuum entspannt.
a Das ist **dadurch gekennzeichnet, dass** die dazu nötige mechanische Energie zunächst für das Entspannen aufgebracht wird. Diese Vakuumenergie wird aber beim anschließenden Verdichtungstakt wieder zurück gewonnen.
b Dieses ist ein physikalisches Prinzip und es ist daher keinerlei weitere Maßnahme dafür erforderlich.
**Verdichten:**

**3.** Das Verdichtungsverhältnis (derzeit z. B. 10 : 1) muss nach wie vor gleich bleiben, bezogen auf das angesaugte Luftvolumen (1 m³).
a Das ist **dadurch gekennzeichnet, dass** der Brennraum zum Hubraum entsprechend stimmt. Im Vergleich zum Hubraum 2 m² heißt das 1 m³ Luft und somit 0,1 m³ Brennraum.
b Dieses wird bewerkstelligt durch Einhaltung vorgehender Vorgaben.

**4.** Überwachungseinrichtung:
Das Ansaugventil kann eventuell von selbst zu Schaden kommen durch altern oder sonstiges, wie es derzeit ja auch passieren kann.
a Das ist **dadurch gekennzeichnet, dass** anstatt 1 m Luft etwas mehr angesaugt wird und somit das Verdichtungsverhältnis unangebracht hochgetrieben wird.
b Das wird bewerkstelligt durch Einsetzen eines kleinen Sicherheitsventils in den Zylinderdeckel.
Das Sicherheitsventil wird z. B. 10 % höher eingestellt als maximaler Betriebsdruck des Motors. Am besten sollte dieser beim Motortest ermittelt werden. Die bei Überdruck entweichende Luft über das Sicherheitsventil wird in den Auspuff geführt. Trifft das ein, welches durch ein Alarm-Monometer festgestellt wird, ist eine Reparatur fällig, welches bald geschehen muss.

**5.** Das Verbrennungs-Mischungsverhältnis muss gleich bleiben. Grundlage ist nach wie vor das angesaugte Luftvolumen (1 m³).
a Das ist **dadurch gekennzeichnet dass** die Kraftstoffzufuhrmenge beibehalten wird.
b Dieses wird bewerkstelligt durch gleiche Einstellung nach wie vor des Einspritz bzw. des Vergasersystems
.**Expansion:**

**6.** Das Durchdrehen des Motors z. B. im kalten Zustand (Anlasserbetrieb) oder drehen vor allem im Motorteillastbetrieb zehren unsinnigerweise mechanische Energie auf. Das bedeutet Wirkungsgradverlust im Expansionstakt.
a Das ist **dadurch gekennzeichnet, dass** die Luft im Expansionstakt nicht in der Lage ist, den gesamten Hubraum auszufüllen. Es stellt sich daher zwangsläufig sogar ein Vakuum ein.
b Abhilfe wird bewerkstelligt durch Einbau eines Rückschlagventils in den Zylinderkopfdeckel. Das Rückschlagventil wird im Folgenden anhand beiliegender Zeichnung erläutert. Es zeigt:
Figur A: einen Schnitt durch das erfindungsgemäße Rückschlagventil - siehe Anhang.
Gemäß Figur A besteht das Rückschlagventil aus dem Gehäuse (1), welches Ventilschaft mit Ventilteller (2) beinhaltet, Druckfeder (3), lose Duckplatte (4), feste Druckhülse (5) sowie Befestigung (6). Druckglocke (7) bildet mit Befestigung (8) und Stößelstange (9) den Stößel komplett.
**Funktion während des Expansionstakts:**
Druckglocke (7) an Stößelstange (9) drückt auf lose Druckplatte (4) und somit auf die gegen Vakuum verstärkte Druckfeder (3). Druckfeder (3) wird dabei etwas zusammengedrückt. Das gilt im Expansionstakt von 1/4 bis zum Ende dessen. Hierbei bleibt Ventil (2) immer noch geschlossen und öffnet erst im Vakuumfall selbsttätig, weil Druckfeder (3) dieses ja jetzt zulässt. Schließen erfolgt sofort, wenn Glocke (7) nach oben geht und Druckfeder (3) wieder aktiv **dadurch** wird.
**Ausstoßen:**

**7.** Die Auspuff-Schallstärke verringert sich infolge des erreichten kleineren Expansions-Enddrucks erheblich.
a Das ist **dadurch gekennzeichnet, dass** die Schallstärke entsprechend der Druckstärke 0,0 BAR Überdruck im besten Ausführungsfall sogar unhörbar ist.
b Dieses wird bewerkstelligt durch Änderung des Schalldämpfers in eine wesentlich einfachere Bauweise in eine vorteilhafte Auspuffanlage.
Vorteilhafte Weiterbildung der Erfindung:

**8.** Bis hierher galt der heutige Motor als Basis, weshalb in diesen Beispielen 20 % des Treibstoffgehalts durch Wasserkühlung vernichtet wird.
a Das ist **dadurch gekennzeichnet, dass** die Wasserkühlung hier entfällt, welches weitere Einsparung von Kraftstoff bedeutet.
b Dieses wird bewerkstelligt durch Wegfall der Wasserkühlung. In diesem Fall kommen daher eventuell feuerfeste Keramikmotoren zum Einsatz, welches bei Versuchen ermittelt werden muss. Die Motortemperatur steigt nicht ins Unendliche, sondern hält sich mit der Verbrennungstemperatur die Waage.
Kolbenbrennkraft-Maschine mit interner Luftkühlung:
Dies ist eine weitere Ausführung der Erfindung, welche im Folgenden anhand der beiliegenden Zeichnung näher erläutert wird. Es zeigt:
Figur B: einen Schnitt durch den erfindungsgemäßen Kolbenmotor als Beispiel - siehe Anhang.
Kolben (1) ragt in die Lufttrennglocke (2) hinein, um **dadurch** Explosion - bei richtigem Treibstoff-Luftgemisch - zu gewähren (Verdichtungstakt).
Ansaugventil (3), lose verstärkte Druckfeder (5) und feste Druckplatte (6) werden betätigt über Ventilstößel (7) (Ansaugtakt).
Sicherheitsventil (4) zusammen mit Alarmgeber (8) werden vom Motorhersteller konzipiert als Überwachung der Dichtheit Ansaugventil (3) und somit des angesaugten Luftvolumens (Verdichtungstakt).
Treibstoff-Einspritzung (9) und Zündkerze (10) münden, wie üblich, in den Explosionsraum, d. h. in die Lufttrennglocke (2) (Explosion findet jetzt statt bei dieser Kolbenstellung).
Rückschlagventil Figur A - siehe eigene Beschreibung S. 5 - kommt hier ebenfalls zum Einsatz. (Zeichnung Figur A im Anhang).
Ausstoßventil (14), lose verstärkte Druckfeder (12) und feste Druckplatte (6) werden betätigt über Ventilstößel (11) (Expansionstakt).
Zylinderkopf-Deckel (13) zusammen mit Zylinder (15) bilden den Hubraum vom Koben (1) begrenzt.
Fazit zu obigem Motorbeispiel: Dieser Motortyp hat im Vergleich zum derzeitigen größere Zylinder-Volumen und zwar 2 m³ anstatt 1 m³. Ein weiteres Merkmal ist die innere Luftkühlung und die Neukonzeption des Verbrennungsraums:

## Geänderte Patentansprüche

### Geänderte Patentansprüche gemäss Regel 137(2) EPÜ.

**1.** Beii derzeitiger Motorhubraumgröße, angenommen 1 m³ (zum besseren Verständnis m³ d.h. maximiert gewählt), wird natürlich auch 1 m³ Luft angesaugt.
Der Druck ganz am Ende des Expansionstrakts ist aber derzeit noch viel zu hoch.
Dieser hohe Enddruck wird entschieden kleiner, wenn z. B. 1 m³ Luft auf 2 m³ Hubraumgröße angesaugt wird.
**Ansaugen:**
1.1. Derzeit ungenützte Druck- und Wärmeenergie am Ende des Expansionstakts eines Motors ist viel zu hoch. Also werden die beiden Energiearten verringert, um den Benzinverbrauch zu senken.
a) Das ist **dadurch gekennzeichnet, dass** das Ansaugventil schon früher schließt. Es schließt z. B. schon dann, wenn der Hubraum erst halb mit Luft gefüllt ist. Bei 2 m³ Hubraum heißt das 1 m³ Luft.
Ab dem Ansaugweg entsteht daher ein Unterdruck im Hubraum. Dieser (im Maximalfall 0,18 kp/cm²) entsprechende Öffnungskraft jedoch muss das Ansaugventil standhalten, ohne sich von selbst zu öffnen.
b) Dieses wird bewerkstelligt durch Verstärkung der Ansaugventilfeder sowie durch Änderung an der Nockenwelle.
1.2. Die gefasste angesaugte Luft (1 m³) wird nun also bei weiterer Vergrößerung des Hubraumes (2 m³) ins Vakuum entspannt.
a) Das ist **dadurch gekennzeichnet, dass** die dazu nötige mechanische Energie zunächst für das Entspannen aufgebracht wird. Diese Vakuumenergie wird aber beim anschließenden Verdichtungstakt wieder zurück gewonnen.
b) Dieses ist ein physikalisches Prinzip und es ist daher keinerlei weitere Maßnahme dafür erforderlich.
**Verdichten:**
1.3. Das Verdichtungsverhältnis (derzeit z. B. 10 : 1) muss nach wie vor gleich bleiben, bezogen auf das angesaugte Luftvolumen (1 m³).
a) Das ist **dadurch gekennzeichnet, dass** der Brennraum zum Hubraum entsprechend stimmt. Im Vergleich zum Hubraum 2 m² heißt das 1 m³ Luft und somit 0,1 m³ Brennraum.
b) Dieses wird bewerkstelligt durch Einhaltung vorgehender Vorgaben.
1.4. Überwachungseinrichtung:
Das Ansaugventil kann eventuell von selbst zu Schaden kommen durch altern oder sonstiges, wie es derzeit ja auch passieren kann.
a) Das ist **dadurch gekennzeichnet, dass** anstatt 1 m Luft etwas mehr angesaugt wird und somit das Verdichtungsverhältnis unangebracht hochgetrieben wird.
b) Das wird bewerkstelligt durch Einsetzen eines kleinen Sicherheitsventils in den Zylinderdeckel.
Das Sicherheitsventil wird z. B. 10 % höher eingestellt als maximaler Betriebsdruck des Motors. Am besten sollte dieser beim Motortest ermittelt werden. Die bei Überdruck entweichende Luft über das Sicherheitsventil wird in den Auspuff geführt. Trifft das ein, welches durch ein Alarm-Monometer festgestellt wird, ist eine Reparatur fällig, welches bald geschehen muss.
1.5. Das Verbrennungs-Mischungsverhältnis muss gleich bleiben. Grundlage ist nach wie vor das angesaugte Luftvolumen (1 m³).
a) Das ist **dadurch gekennzeichnet dass** die Kraftstoffzufuhrmenge beibehalten wird.
b) Dieses wird bewerkstelligt durch gleiche Einstellung nach wie vor des Einspritz bzw. des Vergasersystems.
**Expansion:**
1.6. Das Durchdrehen des Motors z. B. im kalten Zustand (Anlasserbetrieb) oder drehen vor allem im Motorteillastbetrieb zehren unsinnigerweise mechanische Energie auf. Das bedeutet Wirkungsgradverlust im Expansionstakt.
a) Das ist **dadurch gekennzeichnet, dass** die Luft im Expansionstakt nicht in der Lage ist, den gesamten Hubraum auszufüllen. Es stellt sich daher zwangsläufig sogar ein Vakuum ein.
b) Abhilfe wird bewerkstelligt durch Einbau eines Rückschlagventils in den Zylinderkopfdeckel. Das Rückschlagventil wird im Folgenden anhand beiliegender Zeichnung erläutert. Es zeigt:
Figur A: einen Schnitt durch das erfindungsgemäße Rückschlagventil - siehe Anhang.
Gemäß Figur A besteht das Rückschlagventil aus dem Gehäuse (1), welches Ventilschaft mit Ventilteller (2) beinhaltet, Druckfeder (3), lose Duckplatte (4), feste Druckhülse (5) sowie Befestigung (6). Druckglocke (7) bildet mit Befestigung (8) und Stößelstange (9) den Stößel komplett.
**Funktion während des Expansionstakts:**
Druckglocke (7) an Stößelstange (9) drückt auf lose Druckplatte (4) und somit auf die gegen Vakuum verstärkte Druckfeder (3). Druckfeder (3) wird dabei etwas zusammengedrückt. Das gilt im Expansionstakt von 1/4 bis zum Ende dessen. Hierbei bleibt Ventil (2) immer noch geschlossen und öffnet erst im Vakuumfall selbsttätig, weil Druckfeder (3) dieses ja jetzt zulässt. Schließen erfolgt sofort, wenn Glocke (7) nach oben geht und Druckfeder (3) wieder aktiv **dadurch** wird.
**Ausstoßen:**
1.7. Die Auspuff-Schallstärke verringert sich infolge des erreichten kleineren Expansions-Enddrucks erheblich.
a) Das ist **dadurch gekennzeichnet, dass** die Schallstärke entsprechend der Druckstärke 0,0 BAR Überdruck im besten Ausführungsfall sogar unhörbar ist.
b) Dieses wird bewerkstelligt durch Änderung des Schalldämpfers in eine wesentlich einfachere Bauweise in eine vorteilhafte Auspuffanlage.
**Vorteilhafte Weiterbildung der Erfindung:**
2. Bis hierher galt der heutige Motor als Basis, weshalb in diesen Beispielen 20 % des Treibstoffgehalts durch Wasserkühlung vernichtet wird.
a) Das ist **dadurch gekennzeichnet, dass** die Wasserkühlung hier entfällt, welches weitere Einsparung von Kraftstoff bedeutet.
b) Dieses wird bewerkstelligt durch Wegfall der Wasserkühlung. In diesem Fall kommen daher eventuell feuerfeste Keramikmotoren zum Einsatz, welches bei Versuchen ermittelt werden muss. Die Motortemperatur steigt nicht ins Unendliche, sondern hält sich mit der Verbrennungstemperatur die Waage.
**Kolbenbrennkraft-Maschine mit interner Luftkühlung:**
3. Dies ist eine weitere Ausführung der Erfindung, welche im Folgenden anhand der beiliegenden Zeichnung näher erläutert wird. Es zeigt:
Figur B: einen Schnitt durch den erfindungsgemäßen Kolbenmotor als Beispiel - siehe Anhang.
Kolben (1) ragt in die Lufttrennglocke (2) hinein, um **dadurch** Explosion - bei richtigem Treibstoff-Luftgemisch - zu gewähren (Verdichtungstakt).
Ansaugventil (3), lose verstärkte Druckfeder (5) und feste Druckplatte (6) werden betätigt über Ventilstößel (7) (Ansaugtakt).
Sicherheitsventil (4) zusammen mit Alarmgeber (8) werden vom Motorhersteller konzipiert als Überwachung der Dichtheit Ansaugventil (3) und somit des angesaugten Luftvolumens (Verdichtungstakt).
Treibstoff-Einspritzung (9) und Zündkerze (10) münden, wie üblich, in den Explosionsraum, d. h. in die Lufttrennglocke (2) (Explosion findet jetzt statt bei dieser Kolbenstellung).
Rückschlagventil Figur A - siehe eigene Beschreibung S. 5 - kommt hier ebenfalls zum Einsatz. (Zeichnung Figur A im Anhang).
Ausstoßventil (14), lose verstärkte Druckfeder (12) und feste Druckplatte (6) werden betätigt über Ventilstößel (11) (Expansionstakt).
Zylinderkopf-Deckel (13) zusammen mit Zylinder (15) bilden den Hubraum vom Koben (1) begrenzt.
**Fazit zu obigem Motorbeispiel:**
Dieser Motortyp hat im Vergleich zum derzeitigen größere Zylinder-Volumen und zwar 2 m³ anstatt 1 m³. Ein weiteres Merkmal ist die innere Luftkühlung und die Neukonzeption des Verbrennungsraums:
